# EUROPEAN PATENT APPLICATION

(11) **EP 4 765 273 A1**
(43) Date of publication of application: **24.06.2026**
(21) Application number: 25820440.3
(22) Date of filing: 22.04.2025
(51) Int. Cl.: H01M 10/04, B65H 23/182

(54) **BATTERY MANUFACTURING APPARATUS AND METHOD THEREOF**

(30) Priority: 07.06.2024 KR 20240074405
(71) Applicant: LG Energy Solution, Ltd., Seoul 07335 (KR)
(72) Inventor: JEONG, Jae Won, Daejeon 34122 (KR); LIM, Jae Won, Daejeon 34122 (KR); LEE, Jeong Kyu, Daejeon 34122 (KR); KIM, Yoon Seong, Daejeon 34122 (KR)
(74) Representative: Goddar, Heinz J.
(86) International application number: PCT/KR2025/095254
(87) International publication number: WO 2025/254496

(57) **Abstract**

A battery manufacturing device according to an embodiment of this document may include a memory configured to store at least one instruction, and at least one processor configured to execute the at least one instruction, in which the at least one processor is configured to, in a winding process of a battery, identify a movement distance that an electrode plate moves in a left direction or right direction of a direction in which the electrode plate advances before being wound, as a speed at which the electrode plate is wound is changed, determine a tension for pulling the electrode plate in a direction opposite to the direction in which the plate advances, based on the movement distance, and wind the electrode plate based on the tension.

## Description

### TECHNICAL FIELD

### Cross-reference to Related Applications

This application claims priority from Korean Patent Application No. 10-2024-0074405, filed on June 7, 2024, the disclosure of which is incorporated by reference herein.

### Technical Field

Embodiments disclosed in this document relate to a battery manufacturing device and method thereof.

### BACKGROUND ART

Recently, research and development on secondary batteries have been actively conducted. Here, secondary batteries are batteries that can be charged and discharged, and may be interpreted as including both conventional Ni/Cd batteries, Ni/MH batteries, and recent lithium-ion batteries. Recently, the scope of use of the secondary batteries has expanded to include a power source for electric vehicles, and the secondary batteries are attracting attention as a next-generation energy storage medium.

Recently, due to the increasing demand for high-capacity batteries, development of high-capacity batteries is being made. In particular, competition for the development of large cylindrical batteries with a cylindrical form factor is intensifying due to issues of easy mass production, stability, and production costs. In order to manufacture cylindrical batteries, a technology has been developed in which electrode plates and separators are wound into a cylindrical shape. As the demand for cylindrical batteries increases, battery manufacturing technology is being developed to reduce the time required for manufacturing cylindrical batteries, improve the precision with which electrode plates and separators are wound, and reduce the defect rate.

### DISCLOSURE OF THE INVENTION

### TECHNICAL PROBLEM

Embodiments disclosed in this document provide a battery manufacturing device and method thereof for winding an electrode plate while changing a winding speed of the electrode plate.

Embodiments disclosed in this document provide a battery manufacturing device and method thereof for winding an electrode plate while accelerating, maintaining the speed, or decelerating.

Embodiments disclosed in this document provide a battery manufacturing device and method thereof capable of shortening the manufacturing time of a battery by changing a winding speed of an electrode plate.

Embodiments disclosed in this document provide a battery manufacturing device and method thereof for winding an electrode plate subjected to a changing tension.

Embodiments disclosed in this document provide a battery manufacturing device and method thereof for determining a tension that changes according to a movement distance that an electrode plate moves in the left direction or right direction of a direction in which the electrode plate advances.

Embodiments disclosed in this document provide a battery manufacturing device and method thereof for improving a winding stability or winding precision of an electrode plate.

Embodiments disclosed in this document provide a battery manufacturing device and method thereof for determining a tension that changes as a winding speed of an electrode plate changes.

Embodiments disclosed in this document provide a battery manufacturing device and method thereof capable of reducing a defect rate of a manufactured battery.

Embodiments disclosed in this document provide a battery manufacturing device and method thereof capable of shortening the manufacturing time of a battery by improving the winding performance.

The technical problems of this document are not limited to the technical problems mentioned above, and other technical problems that are not mentioned may be clearly understood by those skilled in the art from the descriptions below.

### TECHNICAL SOLUTION

A battery manufacturing device according to an embodiment of this document includes a memory configured to store at least one instruction, and at least one processor configured to execute the at least one instruction.

According to an embodiment, the at least one processor may be configured to, in a winding process of a battery, identify a movement distance that an electrode plate moves in a left direction or right direction of a direction in which the electrode plate advances before being wound, as a speed at which the electrode plate is wound is changed, determine a tension for pulling the electrode plate in a direction opposite to the direction in which the plate advances, based on the movement distance, and wind the electrode plate based on the tension.

According to an embodiment, the at least one processor may be configured to determine a first speed value at which the electrode plate is wound at a point in time when a length to which the electrode plate is wound is included in a first length range that is less than a first length to be less than a second speed value at which the electrode plate is wound at a point in time when the length to which the electrode plate is wound is included in a second length range that is equal to or greater than the first length and less than a second length.

According to an embodiment, the one or more processors may be configured to accelerate and wind the electrode plate over time while the length to which the electrode plate is wound is included in the first length range, wind the electrode plate at a constant speed over time so that the speed at which the electrode plate is wound is included in a designated speed range while the length to which the electrode plate is wound is included in the second length range, and decelerate and wind the electrode plate over time while the length to which the electrode plate is wound is included in a third length range that is equal to or greater than the second length.

According to an embodiment, the one or more processors may be configured to determine a first speed value at which the electrode plate is wound at a point in time that is included in a first time range where the time at which the plate is wound is less than a first time to be less than a second speed value at which the electrode plate is wound at a point in time that is included in a second time range where the time at which the electrode plate is wound is equal to or greater than the first time and less than a second time.

According to an embodiment, the one or more processors may be configured to determine the tension based on a change in the speed at which the electrode plate is wound.

According to an embodiment, the one or more processors may be configured to determine the tension based on a correlation in which the tension increases as the movement distance increases.

According to an embodiment, the one or more processors may be configured to determine the tension at a point in time when the movement distance is included in a first distance range less than a first distance as a first magnitude and determine the tension at a point in time when the movement distance is included in a second distance range equal to or greater than the first distance as a second magnitude greater than the first magnitude.

According to an embodiment, the electrode plate may include at least one of a positive electrode, a negative electrode, or any combination thereof.

A battery manufacturing method according to other embodiments disclosed in this document, in a winding process of the battery, an operation of identifying a movement distance that an electrode plate moves in a left direction or right direction of a direction in which the electrode plate advances before being wound, as a speed at which the electrode plate is wound is changed in a winding process of the battery, an operation of determining a tension for pulling the electrode plate in a direction opposite to the direction in which the electrode plate advances, based on the movement distance, and an operation of winding the electrode plate based on the tension are included.

According to an embodiment, the battery manufacturing method may further include an operation of determining a first speed value at which the electrode plate is wound at a point in time when a length to which the electrode plate is wound is included in a first length range that is less than a first length to be less than a second speed value at which the electrode plate is wound at a point in time when the length to which the electrode plate is wound is included in a second length range that is equal to or greater than the first length and less than a second length.

According to an embodiment, the operation of determining the first speed value at which the electrode plate is wound at a point in time when a length to which the electrode plate is wound is included in a first length range that is less than a first length to be less than the second speed value at which the electrode plate is wound at a point in time when the length to which the electrode plate is wound is included in the second length range that is equal to or greater than the first length and less than the second length may include an operation of accelerating and winding the electrode plate over time while the length to which the electrode plate is wound is included in the first length range, an operation of winding the electrode plate at a constant speed over time so that the speed at which the electrode plate is wound is included in a designated speed range while the length to which the electrode plate wound is included in the second length range, and an operation of decelerating and winding the electrode plate over time while the length to which the electrode plate wound is included in a third length range that is equal to or greater than the second length.

According to an embodiment, the battery manufacturing method may further include an operation of determining a first speed value at which the electrode plate is wound at a point in time that is included in a first time range where the time at which the plate is wound is less than a first time to be less than a second speed value at which the electrode plate is wound at a point in time that is included in a second time range where the time at which the electrode plate is wound is equal to or greater than the first time and less than a second time.

According to an embodiment, the battery manufacturing method may further include an operation of determining the tension based on a change in the speed at which the electrode plate is wound.

According to an embodiment, the operation of determining the tension for pulling the electrode plate in the direction opposite to the direction in which the electrode plate advances, based on the movement distance may include an operation of determining the tension based on a correlation in which the tension increases as the movement distance increases.

According to an embodiment, the operation of determining the tension for pulling the electrode plate in the direction opposite to the direction in which the electrode plate advances, based on the movement distance may include an operation of determining the tension at a point in time when the movement distance is included in a first distance range less than a first distance as a first magnitude and an operation of determining the tension at a point in time when the movement distance is included in a second distance range equal to or greater than the first distance as a second magnitude greater than the first magnitude.

According to an embodiment, in the battery manufacturing method, the electrode plate may include at least one of a positive electrode, a negative electrode, or any combination thereof.

### ADVANTAGEOUS EFFECTS

This technology can wind an electrode plate while changing a winding speed of the electrode plate.

In addition, this technology can wind an electrode plate while accelerating, maintaining the speed, or decelerating.

In addition, this technology can shorten the manufacturing time of a battery by changing a winding speed of an electrode plate.

In addition, this technology can wind an electrode plate subjected to a changing tension.

In addition, this technology can determine a tension that changes according to a movement distance that an electrode plate moves in the left direction or right direction of a direction in which the electrode plate advances.

In addition, this technology can determine a tension that changes as a winding speed of an electrode plate changes.

In addition, this technology can improve a winding stability or winding precision of an electrode plate.

In addition, this technology can reduce a defect rate of a manufactured battery.

In addition, this technology can shorten the manufacturing time of a battery by improving the winding performance.

In addition, a variety of effects can be provided that are identified directly or indirectly through this document.

### BRIEF DESCRIPTION OF THE DRAWINGS

FIG. 1 is a block diagram showing a configuration of a battery manufacturing device according to an embodiment of this document.
FIG. 2 shows a winding process in a battery manufacturing device and a battery manufacturing method according to an embodiment of this document.
FIG. 3 shows a movement distance of an electrode plate measured, in a battery manufacturing device and a battery manufacturing method according to an embodiment of this document.
FIG. 4 shows a graph showing a movement distance according to a position of an electrode plate, in a battery manufacturing device and a battery manufacturing method according to an embodiment of this document.
FIG. 5 shows a flow of an operation of a battery manufacturing device for winding an electrode plate, in a battery manufacturing device and a battery manufacturing method according to an embodiment of this document.
FIG. 6 is a block diagram showing a hardware configuration of a computing system for performing a battery manufacturing method, in a battery manufacturing device and a battery manufacturing method according to an embodiment of this document.

### MODE FOR CARRYING OUT THE INVENTION

Hereinafter, some embodiments described in this document are described with reference to the accompanying drawings. However, this is not intended to limit the present technology to a specific embodiment, but should be understood to include various modifications, equivalents, and/or alternatives of the embodiments of the present technology.

When adding reference numerals to components in each drawing, it should be noted that the same components are given the same reference numerals as much as possible even if they are shown in different drawings. In addition, when describing various embodiments disclosed in this document, if a specific description of a related known configuration or function is determined to hinder understanding of the embodiments of the present disclosure, the detailed description thereof is omitted. A singular form of a noun corresponding to an item may include one item or a plurality of items unless the relevant context clearly indicates otherwise.

In describing the components of the embodiments of this document, terms such as first, second, A, B, (a), (b), etc. may be used. These terms are only intended to distinguish the components from other components, and the nature, order, or sequence of the components are not limited by the terms. In addition, unless otherwise defined, all terms used herein, including technical or scientific terms, have the same meaning as generally understood by a person having ordinary skill in the art to which the embodiments disclosed in this document belong. Terms defined in commonly used dictionaries should be interpreted as having a meaning consistent with the meaning they have in the context of the relevant technology, and shall not be interpreted in an ideal or excessively formal sense unless explicitly defined in this application.

In addition, in the present disclosure, expressions of "more than" or "less than" may be used to determine whether a specific condition is satisfied or fulfilled, but this is only a description for expressing an example and does not exclude descriptions of "greater than or equal to" or "less than or equal to". A condition described as "greater than or equal to" may be replaced with "more than", a condition described as "less than or equal to" may be replaced with "less than", and a condition described as "greater than or equal to and less than" may be replaced with "more than and less than or equal to". In addition, hereinafter, "A" to "B" mean at least one of the elements from A (including A) to B (including B).

In this document, each of phrases "A or B", "at least one of A and B", "at least one of A or B", "A, B, or C", "at least one of A, B, and C", and "at least one of A, B, or C" may include any one of the items listed together in the corresponding phrase among the phrases, or all possible combinations thereof.

In this document, when a component (e.g., a first component) is referred to as being "connected", "coupled" or "joined" to another component (e.g., a second component), with or without the terms "functionally" or "communicatively", it means that a component can be connected to another component directly (e.g., in a wired manner), wirelessly, or through a third component.

According to an embodiment, the method according to the various embodiments disclosed in this document may be provided by being included in a computer program product. The computer program product may be traded between a seller and a buyer as a product. The computer program product may be distributed in the form of a machine-readable recording medium (e.g., compact disc read only memory (CD-ROM)), or distributed through an application store, distributed directly between two user devices, or distributed online (e.g., downloaded or uploaded). In the case of online distribution, at least a part of the computer program product may be temporarily stored or tentatively generated in a machine-readable recording medium, such as a memory of a manufacturer's server, an application store's server, or a relay server.

According to various embodiments, each of the components (e.g., modules or programs) described above may include a single or a plurality of entities, and some of the plurality of entities may be separated and placed in other components. According to various embodiments, one or more of the components or operations described above may be omitted, or one or more other components or operations may be added. Alternatively or additionally, a plurality of components (e.g., modules or programs) may be integrated into a single component. In such a case, the integrated component may perform one or more functions of each of the plurality of components identically or similarly to those performed by the corresponding component among the plurality of components prior to the integration. According to various embodiments, the operations performed by a module, program, or other component may be performed sequentially, in parallel, repeatedly, or heuristically, or one or more of the operations may be performed in a different order, omitted, or performed by adding one or more other operations.

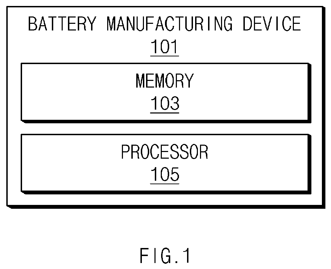

Hereinafter, embodiments of this document will be described in detail with reference to FIGS. 1 to 6.

FIG. 1 is a block diagram showing a configuration of a battery manufacturing device according to an embodiment of this document.

Referring to FIG. 1, a battery manufacturing device 101 may include a memory 103 storing at least one instruction, and one or more processors executing the at least one instruction.

According to an embodiment, the battery manufacturing device 101 may manufacture a battery through an electrode process, an assembly process, an activation process, and a packing process. The electrode process may include a process of generating a negative electrode and a positive electrode to generate a cylindrical battery having a cylindrical form factor. The assembly process may include a process of generating a shape of the battery through the negative electrode, the positive electrode, and a separator. The packing process may include an activation process for activating and stabilizing electric energy, and a process of modularizing to fit a model.

According to an embodiment, the assembly process may include a winding process of winding at least one of the negative electrode, the positive electrode, the separator, or any combination thereof to produce a cylindrical battery.

As an electrode plate (e.g., a positive electrode plate or a negative electrode plate) moves in the left direction or right direction of a direction in which the electrode plate moves while the battery manufacturing device performs the winding process, the shape of a jelly-roll type electrode assembly formed by winding the electrode plate may become unstable.

Therefore, one or more processors 105 of the battery manufacturing device 101 according to an embodiment may wind the electrode plate by varying the tension for pulling the electrode plate depending on a distance that the electrode plate moves in the left direction or right direction of the direction in which the electrode plate moves before being wound as a speed at which the electrode plate is wound is changed, in the winding process of the battery. This is because the degree to which the electrode plate moves in the left direction or right direction decreases as the electrode plate is pulled by increasing the tension in a direction opposite to a direction in which the electrode plate advances.

According to an embodiment, the stability of the battery winding may increase as the battery manufacturing device 101 increases tension and pulls the electrode plate. In addition, the frequency of occurrence of defects due to meandering may decrease as the battery manufacturing device 101 increases tension and pulls the electrode plate. Defects due to meandering in the battery winding process may indicate defects in the battery cell that occur when the electrode plate is wound in a state where the electrode plate moves in the left direction or right direction of the direction in which the electrode plate advances before being wound.

However, the consumption resources when the winding process is in progress while the tension for pulling the electrode plates is continuously maintained to be higher than a specific tension may be greater than the consumption resources when the winding process is in progress while the tension for pulling the electrode plates is continuously maintained to be lower than the specific tension.

Therefore, one or more processors 105 of the battery manufacturing device 101 according to an embodiment may change the tension by determining the tension for pulling the electrode plate according to the distance that the electrode plate has moved in order to achieve an appropriate benefit balance between reducing the consumption resources and reducing the occurrence frequency of defects due to meandering.

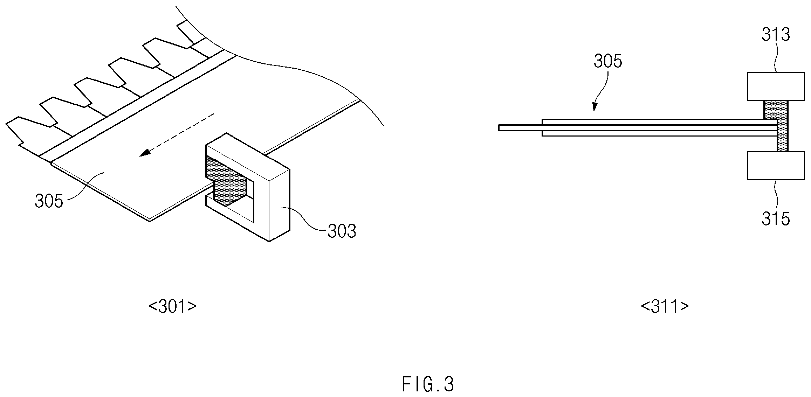

The content of identifying the distance that the electrode plate moves by one or more processors 105 of the battery manufacturing device 101 according to an embodiment will be described below in FIG. 3.

According to an embodiment, one or more processors 105 of the battery manufacturing device 101 may change the speed at which the electrode plate is wound over time.

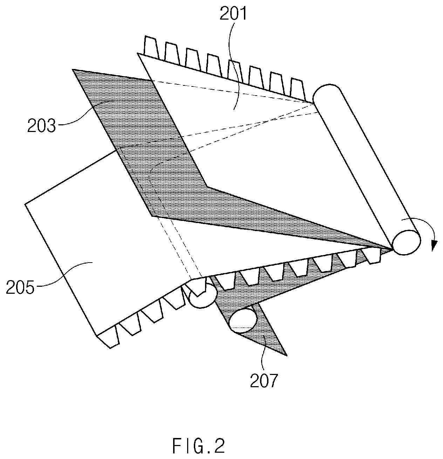

According to an embodiment, a first speed value at which the electrode plate is wound at a point in time when a length to which the electrode plate is wound is included in a first length range less than a first length may be determined to be less than a second speed value at which the electrode plate is wound at a point in time when the length to which the electrode plate is wound is included in a second length range greater than the first length and less than a second length. The contents of the change in the winding speed of the electrode plate will be described below with reference to FIG. 2.

According to an embodiment, one or more processors 105 of the battery manufacturing device 101 may determine the tension according to the identified movement distance based on the correlation in which increases the tension as the movement distance increases. This is because the degree to which the electrode plate moves in the left or right direction decreases as the electrode plate is pulled by increasing tension in the direction opposite to the direction in which the electrode plate advances.

According to another embodiment, one or more processors 105 of the battery manufacturing device 101 may determine the tension at any point in time when the movement distance is included in a first distance range which is less than a first distance as a first magnitude, and determine the tension at any point in time when the movement distance is included in a second distance range which is equal to or greater than the first distance as a second magnitude greater than the first magnitude.

FIG. 2 illustrates a winding process, in a battery manufacturing device and a battery manufacturing method according to an embodiment of this document.

Referring to FIG. 2, one or more processors 105 of the battery manufacturing device 101 may wind a negative electrode plate 201, a first separator 203, a positive electrode plate 205, and a second separator 207. The negative electrode plate 201 may represent a plate that stores positive ions in a state in which the battery cell is being charged. For example, in a lithium ion battery, the negative electrode plate 201 may contain an active material such as graphite, graphene, or silicon, and a conductive material.

The positive electrode plate 205 may represent a plate that releases positive ions in a state in which the battery cell is being charged. For example, in a lithium ion battery, the positive electrode plate 205 may contain an active material such as lithium and a conductive material.

The first separator 203 and the second separator 207 may represent plates for blocking the contact between the positive electrode plate 205 and the negative electrode plate 201. For example, in a lithium ion battery, the first separator 203 and the second separator 207 may include plates made of a polymer having insulating properties. Since the positive electrode plate 205 and the negative electrode plate 201 are wound in a cylindrical shape, the battery manufacturing device 101 may require two separators (e.g., the first separator 203 and the second separator 207) in order to block the contact between the positive electrode plate 205 and the negative electrode plate 201.

According to an embodiment, one or more processors 105 of the battery manufacturing device 101 may obtain a jelly-roll type electrode assembly by winding the negative electrode plate 201, the first separator 203, the positive electrode plate 205, and the second separator 207 together.

According to an embodiment, one or more processors 105 of the battery manufacturing device 101 may divide the winding process into a plurality of stages (e.g., stage 1, stage 2, and stage 3) according to the degree to which the electrode plate is wound. According to an embodiment, the degree to which the electrode plate is wound may be identified by the length to which the electrode plate is wound or the time for which the electrode plate is wound.

For example, the length to which the electrode plate is wound may be distinguished by a first length range, a second length range, and a third length range. The first length range may include a range that is less than a first length. The second length range may include a range that is equal to or greater than the first length and less than a second length. The third length range may include a range that is equal to or greater than the second length.

For another example, the time for which the electrode plate is wound may be distinguished by a first time range, a second time range, and a third time range. The first time range may include a range that is less than a first time. The second time range may include a range that is equal to or greater than the first time and less than a second time. The third time range may include a range that is equal to or greater than the second time.

According to an embodiment, one or more processors 105 of the battery manufacturing device 101 may determine a winding speed as a first speed value in the first stage (e.g., the stage where the length to which the electrode plate is wound is included in the first length range, or the stage where the time for which the electrode plate wound is included in the first time range). One or more processors 105 of the battery manufacturing device 101 may determine the winding speed as a second speed value greater than the first speed value in the second stage (e.g., the stage where the length to which the electrode plate is wound is included in the second length range or the stage where the time for which the electrode plate is wound is included in the second length range). One or more processors 105 of the battery manufacturing device 101 may determine the winding speed as a third speed value less than the second speed value in the third stage (e.g., the stage where the length to which the electrode plate is wound is included in the third length range or the stage where the time for which the electrode plate is wound is included in the third time range).

According to an embodiment, one or more processors 105 of the battery manufacturing device 101 may gradually increase and then decrease the speed at which the electrode plate is wound depending on the degree to which the electrode plate is wound. This is because the process of winding the electrode plate is composed of a part where the electrode plate starts to be wound and the electrode plate accelerates, a part where the electrode plate proceeds at a constant speed, and a part where the electrode plate decelerates.

According to an embodiment, one or more processors 105 of the battery manufacturing device 101 may accelerate and wind the electrode plate over time while the length to which the electrode plate is wound is included in the first length range. One or more processors 105 of the battery manufacturing device 101 may wind the electrode plate at a constant speed over time so that the speed at which the electrode plate is wound is included in a specified speed range while the length to which the electrode plate is wound is included in the second length range. One or more processors 105 of the battery manufacturing device 101 may decelerate the electrode plate over time while the length to which the electrode plate is wound is included in the third length range that is equal to or greater than the second length.

However, if the speed at which the electrode plate is wound is changed in this way, the distance that the electrode plate moves in the left direction or right direction of the direction in which the electrode plate advances may increase.

According to an embodiment, in order to reduce the he movement distance, one or more processors 105 of the battery manufacturing device 101 may pull the electrode plate in the direction opposite to the direction in which the electrode plate advances through the tension changed according to the movement distance by identifying the movement distance or through the tension changed according to the change in the winding speed.

According to another embodiment, one or more processors 105 of the battery manufacturing device 101 may determine the tension at the point in time when the winding speed is changed to be greater than the tension at the point in time when the winding speed is not changed.

FIG. 3 illustrates a measured movement distance of an electrode plate, in a battery manufacturing device and a battery manufacturing method according to an embodiment of this document.

Referring to FIG. 3, a first situation 301 may represent a sensor 303 for measuring a movement distance that an electrode plate 305 moves in the left or right direction of the direction in which the electrode plate 305 advances when the electrode plate 305 is wound. A second situation 311 may represent a light projecting unit 313 and a light receiving unit 315 included in the sensor 303 and measuring the movement distance of the electrode plate 305 in the left direction or right direction. The light projecting unit 313 may include a sensor that emits light. The light receiving unit 315 may include a sensor that detects light.

According to an embodiment, in the first situation 301, when the electrode plate 305 is wound, the electrode plate 305 may move in the left direction or right direction of the direction in which the electrode plate 305 advances before being wound. The sensor 303 may measure the distance that the electrode plate 305 moves.

According to an embodiment, in the second situation 311, while the electrode plate 305 is wound, if the electrode plate 305 does not move in the left direction or right direction of the direction in which the electrode plate 305 advances, the length of light detected by the light receiving unit 315 included in the sensor 303 may be constant.

In the second situation 311, if the electrode plate 305 moves in the left direction or right direction of the direction in which the electrode plate 305 advances and a movement distance occurs while the electrode plate 305 is being wound, the length of light detected by the light receiving unit 315 included in the sensor 303 may change. This is because the position of the light projecting unit 313 and the position of the light receiving unit 315 are constant.

Therefore, when the position of the light projecting unit 313 and the position of the light receiving unit 315 are constant, one or more processors 105 of the battery manufacturing device 101 may measure the movement distance that the electrode plate 305 moves in the left direction or right direction of the direction in which the electrode plate 305 advances based on the length of light detected by the light-receiving unit 315. The process of measuring the movement distance may be referred to as a meandering inspection.

Conventional battery manufacturing apparatuses may include an actuator that moves the electrode plate 305 in the left direction or right direction depending on the movement distance. However, a reduction rate of the movement distance by the actuator may be less than a reduction rate of the movement distance by the battery manufacturing device according to an embodiment.

According to one embodiment, one or more processors 105 of the battery manufacturing device 101 may determine a tension for pulling the electrode plate 305 in the direction opposite to the direction in which the electrode plate 305 advances based on the movement distance measured by the sensor 303 or based on the change in the winding speed.

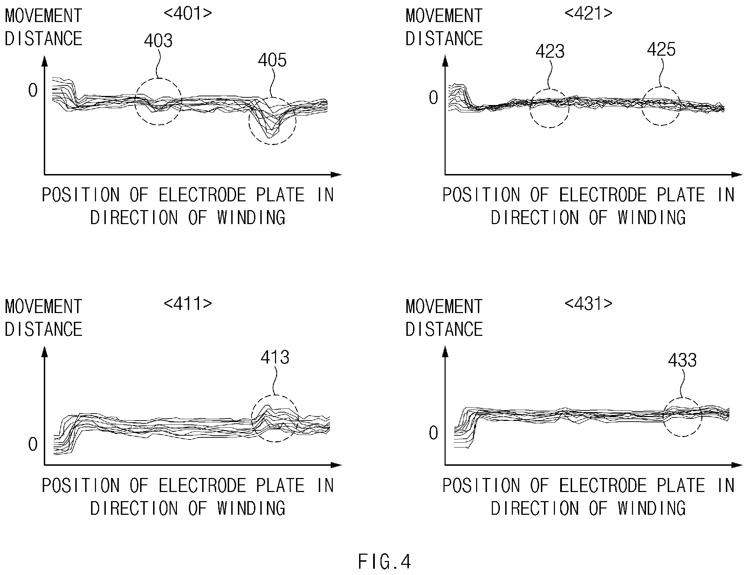

FIG. 4 illustrates a graph showing the movement distance according to the position of the electrode plate, in a battery manufacturing device and a battery manufacturing method according to an embodiment of this document.

Referring to FIG. 4, a first graph 401 may represent a movement distance of the negative electrode plate 201 measured according to a position of the negative electrode plate 201 in the conventional battery manufacturing device.

A first section 403 of the first graph 401 may represent a section in which the speed at which the negative electrode plate 201 is wound changes from being wound at an acceleration over time to being wound at a constant speed over time. A second section 405 of the first graph 401 may represent a section in which the speed at which the negative electrode plate 201 is wound changes from being wound at a constant speed over time to being wound at a deceleration over time.

The second graph 411 may represent the movement distance of the positive electrode plate 205 measured according to the position of the positive electrode plate 205 in a conventional battery manufacturing device.

A third section 413 of a second graph 411 may represent a section in which the speed at which the positive electrode plate 205 is wound changes from being wound at a constant speed over time to being wound at a deceleration over time.

A third graph 421 may represent the movement distance of the negative electrode plate 201 measured according to the position of the negative electrode plate 201 in the battery manufacturing device 101 according to an embodiment.

A fourth section 423 of the third graph 421 may represent a section in which the speed at which the negative electrode plate 201 is wound changes from being wound at an acceleration over time to being wound at a constant speed over time. A fifth section 425 of the third graph 421 may represent a section in which the speed at which the negative electrode plate 201 is wound changes from being wound at a constant speed over time to being wound at a deceleration over time.

A fourth graph 431 may represent the movement distance of the positive electrode plate 205 measured according to the position of the positive electrode plate 205 in the battery manufacturing device 101 according to an embodiment.

A sixth section 433 of the third graph 431 may represent a section in which the speed at which positive electrode plate 205 is wound changes from being wound at a constant speed over time to being wound at a deceleration over time.

According to an embodiment, the movement distance of the negative electrode plate 201 measured by the conventional battery manufacturing device in a specific section (e.g., the first section 403 or the second section 405) of the first graph 401 may be greater than the movement distance of the negative electrode plate 201 measured by the battery manufacturing device 101 according to an embodiment in a section corresponding to the specific section section (e.g., the fourth section 423 or the fifth section 425) in the third graph 421. Therefore, the degree of defect due to the meandering of the negative electrode plate 201 in the battery manufacturing device 101 according to an embodiment may be lower than the degree of defect due to the meandering of the negative electrode plate 201 in the conventional battery manufacturing device.

According to an embodiment, the movement distance of the positive electrode plate 205 measured by the conventional battery manufacturing device in the third section 413 of the second graph 411 may be greater than the movement distance of the positive electrode plate 205 measured by the battery manufacturing device 101 according to an embodiment in the sixth section 433 of the fourth graph 431 corresponding to the third section 413 of the second graph 411. Therefore, the degree of defect due to the meandering of the positive electrode plate 205 in the battery manufacturing device 101 according to an embodiment may be lower than the degree of defect due to the meandering of the positive electrode plate 205 in the conventional battery manufacturing device.

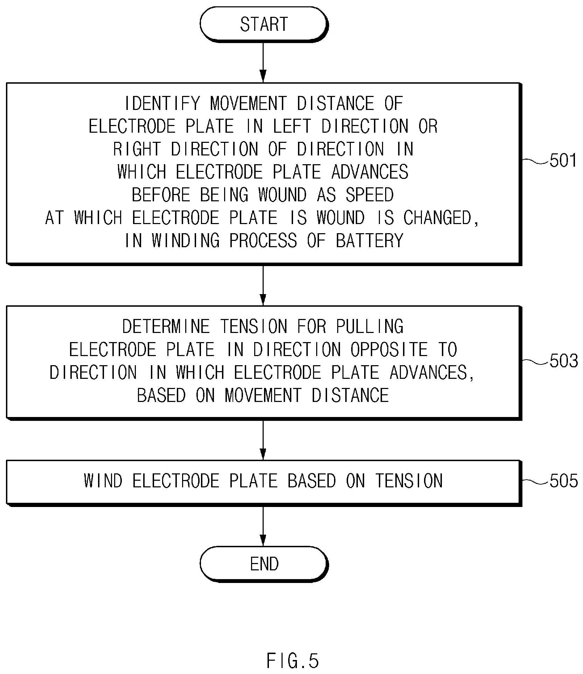

FIG. 5 illustrates a flow of operation of a battery manufacturing device for winding an electrode plate, in a battery manufacturing device and a battery manufacturing method according to an embodiment of this document.

Referring to FIG. 5, in a first operation 501, one or more processors 105 of the battery manufacturing device 101 according to an embodiment may identify the movement distance of the electrode plate in the left direction or right direction of the direction in which the electrode plate advances before being wound as the speed at which the electrode plate is wound is changed, in the winding process of the battery.

According to an embodiment, one or more processors 105 of the battery manufacturing device 101 may change the speed at which the electrode plate is wound over time according to the degree to which the electrode plate is wound (e.g., the length to which the electrode plate is wound or the time for which the electrode plate is wound) when winding the electrode plate (e.g., the negative electrode plate 201 or the positive electrode plate 205). In this way, if the speed at which the electrode plate is wound is changed, the distance that the electrode plate moves in the left direction or right direction of the direction in which the electrode plate advances increases, which may increase the defect rate due to meandering.

According to an embodiment, since the probability of defects due to meandering may increase as the distance that the electrode plate moves increases, one or more processors 105 of the battery manufacturing device 101 may monitor the distance that the electrode plate moves in order to reduce the rate of defects.

According to an embodiment, one or more processors 105 of the battery manufacturing device 101 may measure the distance that the electrode plate moves in the left direction or right direction of the direction in which the electrode plate advances through the sensor 303 of FIG. 3.

In a second operation 503, one or more processors 105 of the battery manufacturing device 101 according to an embodiment may determine a tension for pulling the electrode plate in the direction opposite to the direction in which the electrode plate advances based on the movement distance.

According to an embodiment, one or more processors 105 of the battery manufacturing device 101 may determine a tension corresponding to the identified movement distance based on a correlation in which the tension increases as the movement distance increases. This is because, as the tension pulling in the direction opposite to the direction in which the electrode plate advances increases, the degree to which the electrode plate moves in the left direction or the right direction decreases.

According to another embodiment, one or more processors 105 of the battery manufacturing device 101 may determine the tension at a point in time when the movement distance is included in a first distance range less than a first distance as a first magnitude, and determine the tension at a point in time when the movement distance is included in a second distance range that is equal to or greater than the first distance as a second magnitude greater than the first size.

In a third operation 505, one or more processors 105 of the battery manufacturing device 101 according to an embodiment may wind the electrode plate based on the tension.

According to an embodiment, one or more processors 105 of the battery manufacturing device 101 may wind the electrode plate while pulling the electrode plate with tension in the direction opposite to the direction in which the electrode plate advances. This is because the movement distance of the electrode plate also decreases as the tension increases.

According to an embodiment, the speed at which the electrode plate is wound may represent the length to which the electrode plate is wound according to the time for which the electrode plate is wound, but the embodiment of the present invention may not be limited thereto. For example, the speed at which the electrode plate is wound may represent an angle rotated for winding according to the winding time.

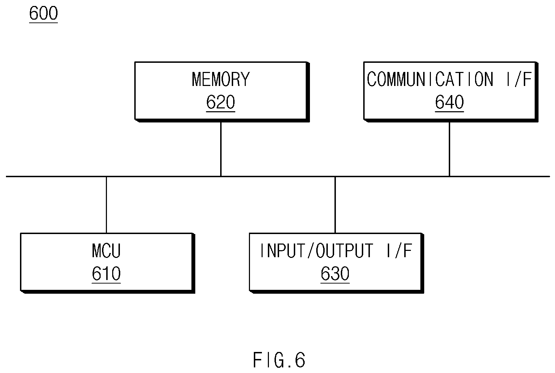

FIG. 6 is a block diagram showing a hardware configuration of a computing system that performs a battery state management method, in a battery state management device and a battery state management method according to an embodiment of this document.

Referring to FIG. 6, a computing system 600 according to an embodiment disclosed in this document may include an MCU 610, a memory 620, an input/output I/F 630, and a communication I/F 640.

The MCU 610 may be one or more processors that executes various programs (e.g., battery cell data collection program, graph generation program, data analysis program, data decomposition algorithm, normalization program, and battery cell diagnosis program, etc.) stored in the memory 620, processes various information including battery cell characteristic data, latent variables, etc. through these programs, and performs the functions of the battery manufacturing device 101 shown in FIGS. 1 to 6 described above.

The memory 620 may store various programs such as the battery cell data collection program, the graph generation program, the data analysis program, the data decomposition algorithm, the normalization program, and the battery cell diagnosis program.

A plurality of such memories 820 may be provided as needed. The memory 620 may be a volatile memory or a nonvolatile memory. The memory 620 used as the volatile memory may be RAM, DRAM, SRAM, etc. The memory 620 used as the nonvolatile memory may be ROM, PROM, EAROM, EPROM, EEPROM, flash memory, etc. The examples of the memories 620 listed above are only examples and are not limited to these examples.

The input/output I/F 630 may provide an interface that allows data to be transmitted and received by connecting an input device (not shown) such as a keyboard, mouse, or touch panel and an output device (not shown) such as a display with the MCU 610.

The communication I/F 640 is a configuration that can transmit and receive various data with the server, and may be various devices that can support wired or wireless communication. For example, the battery manufacturing device 101 may transmit and receive various information including shape models of battery cells, etc. to and from a separately provided external server through the communication I/F 640.

In this way, the computer program according to an embodiment disclosed in this document may be implemented as a module that performs, for example, each function shown in FIG. 2, by being recorded in the memory 620 and processed by the MCU 610.

In the above, even though all the components constituting the embodiments disclosed in this document have been described as being combined as one or operating in combination, the embodiments disclosed in this document are not necessarily limited to such embodiments. That is, within the scope of the purpose of the embodiments disclosed in this document, all of the components may be selectively combined and operated in one or more combinations.

In addition, the terms "include," "configure," or "have" described above, unless specifically stated to the contrary, mean that the corresponding component may be included, and therefore should be interpreted as being able to further include other components rather than excluding other components. All terms including technical or scientific terms have the same meaning as commonly understood by a person skilled in the art to which the embodiments disclosed in this document belong, unless otherwise defined. Terms commonly used, such as terms defined in the dictionary, should be interpreted as being consistent with the contextual meaning of the relevant technology, and should not be interpreted in an idealized or overly formal sense unless clearly defined in this document.

The above-mentioned disclosure outlines the features of several embodiments so that those skilled in the art may better understand aspects of the present disclosure. Those skilled in the art will understand that the present disclosure may be easily used as a basis for designing or changing different structures to perform the same purpose or achieve the same advantages of embodiments introduced in this document. Furthermore, those skilled in the art will recognize that such equivalent configurations do not depart from the scope of the present disclosure, and that various changes, substitutions, and modifications may be made in this specification without departing from the scope of the present disclosure.

## Claims

1. A battery manufacturing device comprising:
a memory configured to store at least one instruction; and
at least one processor configured to execute the at least one instruction,
wherein the at least one processor may be configured to:
in a winding process of the battery, identify a movement distance that an electrode plate moves in a left direction or right direction of a direction in which the electrode plate advances before being wound, as a speed at which the electrode plate is wound is changed in a winding process of a battery;
determine a tension for pulling the electrode plate in a direction opposite to the direction in which the plate advances, based on the movement distance; and
wind the electrode plate based on the tension.

2. The battery manufacturing device of claim 1, wherein the at least one processor is configured to determine a first speed value at which the electrode plate is wound at a point in time when a length to which the electrode plate is wound is included in a first length range that is less than a first length, to be less than a second speed value at which the electrode plate is wound at a point in time when the length to which the electrode plate is wound is included in a second length range that is equal to or greater than the first length and less than a second length.

3. The battery manufacturing device of claim 2, wherein the one or more processors is configured to:
accelerate and wind the electrode plate over time while the length to which the electrode plate is wound is included in the first length range;
wind the electrode plate at a constant speed over time so that the speed at which the electrode plate is wound is included in a designated speed range while the length to which the electrode plate is wound is included in the second length range; and
decelerate and wind the electrode plate over time while the length to which the electrode plate is wound is included in a third length range that is equal to or greater than the second length.

4. The battery manufacturing device of claim 1, wherein the one or more processors is configured to determine a first speed value at which the electrode plate is wound at a point in time that is included in a first time range where the time at which the plate is wound is less than a first time to be less than a second speed value at which the electrode plate is wound at a point in time that is included in a second time range where the time at which the electrode plate is wound is equal to or greater than the first time and less than a second time.

5. The battery manufacturing device of claim 1, wherein the one or more processors is configured to determine the tension based on a change in the speed at which the electrode plate is wound.

6. The battery manufacturing device of claim 1, wherein the one or more processors is configured to determine the tension based on a correlation in which the tension increases as the movement distance increases.

7. The battery manufacturing device of claim 1, wherein the one or more processors is configured to:
determine the tension at a point in time when the movement distance is included in a first distance range less than a first distance as a first magnitude; and
determine the tension at a point in time when the movement distance is included in a second distance range equal to or greater than the first distance as a second magnitude greater than the first magnitude.

8. The battery manufacturing device of claim 1, wherein the electrode plate includes at least one of a positive electrode, a negative electrode, or any combination thereof.

9. A battery manufacturing method comprising:
in a winding process of the battery, an operation of identifying a movement distance that an electrode plate moves in a left direction or right direction of a direction in which the electrode plate advances before being wound, as a speed at which the electrode plate is wound is changed in a winding process of the battery;
an operation of determining a tension for pulling the electrode plate in a direction opposite to the direction in which the electrode plate advances, based on the movement distance; and
an operation of winding the electrode plate based on the tension.

10. The battery manufacturing method of claim 9, further comprising:
an operation of determining a first speed value at which the electrode plate is wound at a point in time when a length to which the electrode plate is wound is included in a first length range that is less than a first length, to be less than a second speed value at which the electrode plate is wound at a point in time when the length to which the electrode plate is wound is included in a second length range that is equal to or greater than the first length and less than a second length.

11. The battery manufacturing method of claim 10, wherein the operation of determining the first speed value at which the electrode plate is wound at a point in time when a length to which the electrode plate is wound is included in a first length range that is less than a first length, to be less than the second speed value at which the electrode plate is wound at a point in time when the length to which the electrode plate is wound is included in the second length range that is equal to or greater than the first length and less than the second length includes:
an operation of accelerating and winding the electrode plate over time while the length to which the electrode plate is wound is included in the first length range;
an operation of winding the electrode plate at a constant speed over time so that the speed at which the electrode plate is wound is included in a designated speed range while the length to which the electrode plate wound is included in the second length range; and
an operation of decelerating and winding the electrode plate over time while the length to which the electrode plate wound is included in a third length range that is equal to or greater than the second length.

12. The battery manufacturing method of claim 9, further comprising:
an operation of determining a first speed value at which the electrode plate is wound at a point in time that is included in a first time range where the time at which the plate is wound is less than a first time to be less than a second speed value at which the electrode plate is wound at a point in time that is included in a second time range where the time at which the electrode plate is wound is equal to or greater than the first time and less than a second time.

13. The battery manufacturing method of claim 9, further comprising:
an operation of determining the tension based on a change in the speed at which the electrode plate is wound.

14. The battery manufacturing method of claim 9, wherein the operation of determining the tension for pulling the electrode plate in the direction opposite to the direction in which the electrode plate advances, based on the movement distance includes an operation of determining the tension based on a correlation in which the tension increases as the movement distance increases.

15. The battery manufacturing method of claim 9, wherein the operation of determining the tension for pulling the electrode plate in the direction opposite to the direction in which the electrode plate advances, based on the movement distance includes:
an operation of determining the tension at a point in time when the movement distance is included in a first distance range less than a first distance as a first magnitude; and
an operation of determining the tension at a point in time when the movement distance is included in a second distance range equal to or greater than the first distance as a second magnitude greater than the first magnitude.

16. The battery manufacturing method of claim 9, wherein the electrode plate includes at least one of a positive electrode, a negative electrode, or any combination thereof.
